# EUROPÄISCHE PATENTSCHRIFT

(11) **EP 1 930 796 B1**
(45) Veröffentlichungstag und Bekanntmachung des Hinweises auf die Patenterteilung: **26.08.2009**
(21) Anmeldenummer: 06025063.6
(22) Anmeldetag: 05.12.2006
(51) Int. Cl.: G05B 19/408, G05B 19/409

(54) **Verfahren zum Konfigurieren eines Bedienteils einer Steuerung**
Method for configuring an operating device of a controller
Procédé pour configurer un dispositif de commande d'une machine

(43) Veröffentlichungstag der Anmeldung: 11.06.2008
(73) Patentinhaber: Rotzler GmbH + Co. KG, 79585 Steinen (DE)
(72) Erfinder: Rotzler, Jürgen, 79585 Steinen (DE); Grundmann, Thomas, 79618 Rheinfelden (DE); Heidecker, Peter, 79585 Steinen (DE)
(74) Vertreter: Wasmuth, Rolf

(56) Entgegenhaltungen:
- DE-A1- 3 710 218
- DE-A1- 3 813 590
- DE-A1- 10 344 361
- US-A- 4 303 973
- US-A1- 2005 012 396
- SIEMENS AG: "SIMATIC TEXTDISPLAY TD200 BENUTZERHANDBUCH"[Online] Januar 2000 (2000-01), Seite 1 BIS 2-1, A-4, XP002438061 Gefunden im Internet: URL:http://www.schoenherr-elektronik.com/f est/download/Systemhandbuch%20TD200.pdf> [gefunden am 2007-06-15]
- LAMTEC: "Betriebsmeldesystem NEMS 16"[Online] 2003, Seiten 1-11,71,113, XP002438083 Gefunden im Internet: URL:http://www.lamtec.de/Bed_anleitg/BA-NE MS16-DLT5070-06-aD-0023K.pdf> [gefunden am 2007-06-15]

## Beschreibung

Die Erfindung betrifft ein Verfahren zum Konfigurieren zumindest eines Bedienteils zumindest einer mikroprozessorbasierten Steuerung in einem Bussystem mit beliebiger Zuordnung der im Oberbegriff des Anspruchs 1 angegebenen Gattung.

Maschinen werden regelmäßig über Maschinensteuerungen betrieben, die vom Benutzer eingegebene Steuerbefehle verarbeiten. Derartige Maschinensteuerungen werden z.B. in der Förder- oder Hebetechnik, wie bei Seilwinden, Kränen oder dgl. genutzt; auch in anderen Anwendungsgebieten wie beispielsweise bei Sonderfahrzeugen wie Abschleppfahrzeugen, Müllfahrzeugen, Feuerwehrfahrzeugen, Roboterfahrzeugen oder dgl. werden Maschinensteuerungen eingesetzt. Moderne Maschinensteuerungen umfassen ein oder auch mehrere integrierte Mikroprozessoren, auf denen zur Steuerung der Maschine Softwareapplikationen ablaufen. Diese sogenannten mikroprozessorbasierten Steuerungen sind auch unter dem Begriff ,Embedded Systems' bekannt.

Zur Kommunikation des Benutzers mit der Steuerung ist ein Bedienteil vorzusehen, über das vom Benutzer unter anderem Steuerungsbefehle aufgegeben werden können. Mit einem derartigen Bedienteil wird z.B. eine Seilwinde oder ein Kran gesteuert und das Heben oder Senken einer Last bewirkt.

Je nach ausgeführter mikroprozessorbasierter Steuerung bzw. ablaufender Applikation der zu steuernden Maschine bzw. des Fahrzeugs müssen über das Bedienteil unterschiedliche Steuerungsbefehle mitgeteilt werden. Diese unterschiedlichen Steuerungsbefehle können über unterschiedliche Tasten eines angeschlossenen Bedienteils angesteuert werden. Da die Tastenbelegung an einem Bedienteil je nach den vorgesehenen Applikationen oder der zu steuernden Maschine stark unterschiedlich ist, sind je nach vorgesehener Applikation oder zu steuernder Maschine unterschiedliche Bedienteile notwendig. Daher muß eine Vielzahl von Bedienteilen sowohl beim Hersteller als auch beim Anwender vorgehalten werden. Dies bedingt einen hohen Aufwand.

Bei Fahrzeugen wie beispielsweise Feuerwehrfahrzeugen oder Fahrzeugen für militärische Einsatzzwecke sind üblicherweise mehrere Steuerungen vorgesehen, über die unterschiedliche Einrichtungen der Fahrzeuge steuerbar sind. Jede Steuerung besitzt ein eigenes Bedienteil, wobei jedes Bedienteil speziell auf die zugeordnete Steuerung angepaßt ist und daher nicht gegen ein Bedienteil der Steuerung einer anderen Einrichtung ausgetauscht werden kann. Um eine permanente Einsatzbereitschaft der Fahrzeuge gewährleisten zu können, beispielsweise bei Feuerwehrfahrzeugen, muß für jede Steuerung ein passendes Ersatzbedienteil vorgehalten werden. Dies bedingt einen hohen logistischen und finanziellen Aufwand.

Je nach geographischem Einsatzgebiet soll die Anzeige des Bedienteils in unterschiedlichen Sprachen erfolgen. Hierzu war bisher vorgesehen, daß die vorgesehene Sprache vom Hersteller fest vorgegeben ist. An dem Bedienteil ist nur eine Sprache gespeichert. Es ist auch möglich, daß mehrere Sprachen in dem Bedienteil gespeichert sind und daß die gewünschte Sprache vom Bediener ausgewählt werden kann. Dies erfordert allerdings entsprechend Speicherplatz und Verwaltungsaufwand in dem Bedienteil.

Es ist wünschenswert, an der Anzeige eine Betriebsanleitung oder eine Kurzbetriebsanleitung und/oder Wartungshinweise anzuzeigen.

Auch die Anzeige von Diagnosehilfsmitteln ist wünschenswert. Auch dies erfordert Speicherplatz und Verwaltungsaufwand in dem Bedienteil.

Die DE 37 10 218 A1 offenbart eine Fernsteuerung für Fernseher, Videorekorder oder dgl., die eine Tastenfunktionsanzeige aufweist. Die Tastenfunktions- und Anzeigespeicher sind am Gerät vorgesehen. Im Betrieb werden von dem Gerät zur Fernsteuerung ein Gerätekode sowie die Funktionen der einzelnen Tasten übertragen. Diese Tastenfunktionsanzeigeinformation wird in der Fernbedienung vorübergehend gespeichert.

Die DE 103 44 361 A1 offenbart eine Einrichtung mit einem mobilen Bedienteil, das mit einer zu steuernden Anlage sowohl drahtlos als auch über eine Datenleitung kommunizieren kann. Zwischen den beiden Betriebsmodi kann umgeschaltet werden. Das Bedienteil muß dabei auf die zu steuernde Anlage abgestimmt sein.

Der Erfindung liegt die Aufgabe zugrunde, ein Verfahren zum Konfigurieren eines Bedienteils einer Steuerung, insbesondere einer mikroprozessorbasierten Steuerung anzugeben, das bei einem einfachem Aufbau des Bedienteils einen vielfältigen Einsatz des gleichen Bedienteils ermöglicht.

Die Aufgabe wird durch ein Verfahren mit den Merkmalen des Anspruchs 1 gelöst.

Für das Verfahren ist vorgesehen, daß beim Verbinden eines Bedienteils mit der Steuerung alle notwendigen Konfigurationsinformationen für das Bedienteil von der Steuerung zu dem Bedienteil übermittelt werden. Die Übermittlung der Informationen erfolgt dabei insbesondere nach dem Einschalten der Steuerung, insbesondere nach dem Initialisierungsvorgang. Die Steuerung ist insbesondere ein auf einem Mikroprozessor basierendes System ("embedded system"). Konfigurationsinformationen können beispielsweise Informationen über die Tastenbelegung des Bedienteils oder Sprachinformationen sein. Die Konfigurationsinformationen können jedoch auch andere oder weitere Informationen umfassen, die die Konfiguration des Bedienteils an dieser Steuerung betreffen. Insbesondere umfassen die Konfigurationsinformationen Informationen, um das Bedienteil betriebsbereit zu machen, Informationen über Menümasken, Informationen, die die Logik der Steuerung betreffen, Hinweistexte, Bedieninformationen, Sicherheitshinweise, Fehlermeldungen, Wartungsinformationen sowie Informationen zur vorbeugenden Wartung, Informationen zur Instandhaltung und Reparatur, Diagnosetools, sonstige Schnittstellendefinitionen und -funktionen und/oder weitere Informationen für den Benutzer.

Dadurch, daß die Konfigurationsinformationen in der Steuerung hinterlegt sind und von der Steuerung zum Bedienteil übermittelt werden, muß das Bedienteil über die spezifische Konfiguration keine Informationen besitzen. Das Bedienteil kann "dumm" sein, also keine eigene Logik oder Konfiguration besitzen. Dadurch kann ein einfach aufgebautes und vielseitig einsetzbares Bedienteil an der Steuerung angeschlossen werden. Die spezifische Anpassung des Bedienteils an den Anwendungsfall erfolgt mittels der Konfigurationsinformationen, die von der Steuerung an das Bedienteil übermittelt werden. Das Bedienteil erhält damit die für die spezielle Anwendung benötigte "Intelligenz" erst nach dem Verbinden mit der Steuerung. Dadurch kann ein einfach aufgebautes Bedienteil an unterschiedlichen Steuerungen eingesetzt werden. Eine Anpassung des Bedienteils an einen Anwendungsfall erfolgt erst beim Anschluß des Bedienteils an die Steuerung, so daß keine Konfiguration des Bedienteils im Vorfeld erfolgen muß. Für unterschiedliche Steuerungen, beispielsweise mehrere in einem Fahrzeug vorhandene Steuerungen, kann jeweils das gleiche, einfach aufgebaute und nicht konfigurierte Bedienteil eingesetzt werden. Dadurch muß, um eine permanente Einsatzbereitschaft mehrerer Einrichtungen zu gewährleisten, nur ein Typ Ersatzbedienteil, insbesondere nur ein einziges Ersatzbedienteil, vorgehalten werden. Dies vereinfacht die Instandhaltung, Lagerhaltung und Logistik.

Das erfindungsgemäße Verfahren ist für eine Vielzahl von Anwendungsfällen nutzbar, bei denen ein oder mehrere Bedienteile einer oder mehrerer Steuerungen, insbesondere in einem Bussystem mit beliebiger Zuordnung, zu konfigurieren sind. Beim Einsatz einer Steuereinrichtung, die mehrere Steuerungen und mehrere Bedienteile umfaßt, ist vorgesehen, daß die Übermittlung der Konfigurationsinformationen von einer Steuerung zu einem oder mehreren zugeordneten Bedienteilen dann erfolgt, wenn die Steuerung über das Bussystem mit den Bedienteilen verbunden wird, beispielsweise beim Einschalten und Initialisieren der Steuerung. In diesem Fall ist insbesondere vorgesehen, daß eine Steuerung nach dem Initialisierungsvorgang, also nach dem Aktivieren, die ihr zugeordneten Bedienteile sucht und an diese Bedienteile die Konfigurationsinformationen übermittelt. Die angegebenen Beispiele stellen nur eine kleine Auswahl möglicher Einsatzfälle dar. Das erfindungsgemäße Verfahren ist sowohl bei stationären wie bei mobilen Maschinen einsetzbar und zwar auch auf Land, auf oder unter Wasser, unter Tage, im Weltraum oder anderen Bereichen.

Vorteilhaft werden die Konfigurationsinformationen im Speicher des Bedienteils gespeichert. Dadurch ist eine Übertragung der Informationen vorteilhaft nur beim ersten Verbinden des Bedienteils mit der Steuerung notwendig. Es kann jedoch auch vorgesehen sein, daß die Informationen bei jedem Verbinden des Bedienteils mit dieser Steuerung erneut übertragen werden.

Vorteilhaft wird bei jedem Verbinden des Bedienteils mit der Steuerung überprüft, ob die in dem Bedienteil gespeicherten Konfigurationsinformationen mit den in der Steuerung gespeicherten Konfigurationsinformationen übereinstimmen. Falls die Informationen nicht übereinstimmen, ist vorgesehen, daß die Konfigurationsinformationen der Steuerung zum Bedienteil übertragen und in dem Bedienteil gespeichert werden. Dabei werden vorteilhaft bereits in dem Bedienteil enthaltene Konfigurationsinformationen überschrieben, so daß in dem Bedienteil nur Speicherplatz für einen Satz Konfigurationsinformationen benötigt wird. Wird ein Bedienteil, das bereits Konfigurationsinformationen einer ersten Steuerung enthält, an eine zweite Steuerung angeschlossen, so werden automatisch die in dem Bedienteil gespeicherten Konfigurationsinformationen mit den Konfigurationsinformationen der zweiten Steuerung überschrieben. So kann ein und dasselbe Bedienteil an einer ersten Steuerung beispielsweise in einer ersten Sprache und mit einer ersten Tastenbelegung arbeiten, und beim Anschluß dieses Bedienteils an eine zweite Steuerung können eine andere Sprache und/oder eine andere Tastenbelegung vorgesehen sein, die in der zweiten Steuerung hinterlegt sind. Dadurch ist ein einfacher Austausch von Bedienteilen möglich.

Vorteilhaft umfaßt die Eingabeeinrichtung mindestens ein Tastenelement, wobei die Eingabeeinrichtung insbesondere eine Folientastatur ist. Die Konfigurationsinformationen umfassen vorteilhaft eine Information über die Tastenbelegung mindestens eines Tastenelements, wobei das Bedienteil die Tastenbelegungsinformation anzeigt. Die Information über die Tastenbelegung kann angeben, welche Funktion ein oder mehrere Tastenelemente besitzen. Dadurch wird für den Bediener eine Zuordnung der Funktionen zu einzelnen Tastenelementen ermöglicht. Es kann jedoch auch vorgesehen sein, daß die Konfigurationsinformation eine Kennung umfaßt, die die Tastenbelegung kennzeichnet. Dadurch ist es für den Bediener möglich, eine entsprechende Tastenbeschriftung anzubringen, beispielsweise durch Anbringung vorgefertigter Beschriftungsschilder oder Beschriftungsstreifen. Dadurch kann auf einfache Weise eine Anpassung des Bedienteils an die jeweilige Applikation der Steuerung vorgenommen werden. Die für die Anpassung benötigte Information erhält der Bediener über die Steuerung und das Bedienteil.

Die Tastenbelegungsinformation wird insbesondere auf der Anzeige angezeigt. Es kann jedoch auch vorgesehen sein, die Tastenbelegungsinformation an dem Tastenelement selbst oder benachbart zu dem Tastenelement, beispielsweise über eine Diode oder dgl., anzuzeigen. Zur Anzeige der Tastenbelegungsinformation kann das Tastenelement auch eine flexible Symbol- und/oder Schriftanzeige aufweisen oder es kann eine flexible Symbol- und/oder Schriftanzeige benachbart zu dem Tastenelement angeordnet sein. Die Anzeige der Tastenbelegungsinformation kann auch an einem anderen Bereich des Bedienteils erfolgen, wobei die Anzeige so erfolgt, daß die Tastenbelegungsinformation zu einem oder mehreren Tastenelementen leicht zuzuordnen ist.

Der Begriff "Tastenelement" ist weit zu verstehen. Das Tastenelement kann beispielsweise ein einzelner Taster, ein Joystick oder eine Sensortaste sein. Es kann jedoch auch vorgesehen sein, daß das Tastenelement auf einer Anzeige, beispielsweise auf einer LCD-Anzeige, angezeigt ist und mit einem Griffel oder über eine oder mehrere Sensortasten betätigt werden kann. Auch andere Tastenelemente können zum Einsatz kommen, so z.B. ein Touchscreen.

Es ist vorgesehen, daß die Konfigurationsinformationen Sprachinformationen der Sprache umfassen, die in der Steuerung als Standardsprache eingestellt ist. Die Sprachinformationen umfassen dabei nicht nur die Angabe der Sprache, sondern die gesamte Sprachinformation, also die von dem Bedienteil anzuzeigenden Begriffe und Sätze. Es ist vorgesehen, daß bei Auswahl einer von der Standardsprache abweichenden Sprache durch den Bediener an dem Bedienteil die Sprachinformationen der ausgewählten Sprache von der Steuerung zum Bedienteil übermittelt werden und die in dem Bedienteil gespeicherten Sprachinformationen mit den Sprachinformationen der ausgewählten Sprache überschrieben werden. Beim erstmaligen Verbinden des Bedienteils mit der Steuerung wird zunächst die Standardsprache (Default-Sprache) an dem Bedienteil eingestellt.

Zum Einstellen der Standardsprache ist vorgesehen, daß zunächst die in dem Bedienteil gespeicherte Sprache abgefragt wird, wenn die Steuerung eingeschaltet und initialisiert wird. Sollte die in dem Bedienteil gespeicherte Sprache von der Standardsprache der Steuerung abweichen, ist vorgesehen, daß die Standardsprache zum Bedienteil übermittelt und dort gespeichert wird. Beim Ausschalten des Bedienteils bleibt die in dem Bedienteil gespeicherte Sprache in dem Bedienteil gespeichert, solange die Steuerung selbst nicht ausgeschaltet wird. Das Bedienteil kann auch so konfiguriert werden, daß die vom Bediener zuletzt eingestellte Sprache erhalten bleibt, auch wenn das Bedienteil oder die Steuerung ausgeschaltet wird. Vorteilhaft werden die weiteren Konfigurationseinstellungen beim Start der Steuerung oder nach dem Verbinden des Bedienteils mit der Steuerung neu eingelesen.

Sollte der Bediener eine andere Sprache wünschen, kann er dies an dem Bedienteil eingeben. Dann werden die gesamten Sprachinformationen mit den Sprachinformationen der ausgewählten Sprache überschrieben, so daß an dem Bedienteil jeweils nur Sprachinformationen einer Sprache gespeichert sind. Dadurch kann der benötigte Speicherplatz gering gehalten werden. Gleichzeitig ergibt sich ein hoher Bedienkomfort, da der Bediener eine gewünschte Sprache auswählen kann. Wird das Bedienteil mit einer anderen Steuerung mit einer anderen Standardsprache verbunden, wird, insbesondere beim Einschalten der Steuerung, automatisch die Standardsprache dieser Steuerung zum Bedienteil übermittelt und dort gespeichert. Beim Verbinden eines Bedienteils mit einer Steuerung und dem Einschalten der Steuerung wird dadurch immer die an dieser Steuerung eingestellte Standardsprache (Default Sprache) eingestellt, unabhängig davon, in welcher Sprache das Bedienteil zuvor eingestellt war.

Vorteilhaft umfassen die Konfigurationsinformationen eine Betriebsanleitung, Wartungshinweise und/oder Informationen zur Diagnose. Die Betriebsanleitung kann dabei auch eine Kurzbetriebsanleitung sein. Die Informationen zur Diagnose sind insbesondere Informationen, die zur Anwendung von Diagnosetools benötigt werden. Dadurch können die für den jeweiligen Anwendungsfall benötigten Informationen für Betrieb, Wartung und/oder Diagnose von dem Bedienteil angezeigt werden. Dadurch, daß die Informationen von der Steuerung übermittelt werden, müssen in dem Bedienteil keine Informationen hierzu gespeichert sein. Dadurch, daß für unterschiedliche Anwendungsfälle unterschiedliche Informationen zu Betrieb, Wartung und Diagnose benötigt werden und die jeweils benötigten Informationen in der Steuerung hinterlegt und zum Bedienteil übermittelt werden, ist der in dem Bedienteil benötigte Speicherplatz und der zur Verwaltung der Daten benötigte Verwaltungsaufwand in dem Bedienteil gering.

Es ist vorgesehen, daß das Bedienteil über ein Anschlußkabel mit der Steuerung verbunden ist und daß das Bedienteil über das Anschlußkabel mit elektrischer Energie versorgt wird. Dadurch wird nur ein Anschlußkabel benötigt, über das sowohl die Informationen als auch die Energie für das Bedienteil übertragen werden. Es kann jedoch auch vorgesehen sein, daß das Bedienteil kabellos mit der Steuerung verbunden ist. Zur Energieversorgung des Bedienteils können beispielsweise Batterien vorgesehen sein.

Insbesondere wird das Bedienteil mit der Steuerung über ein Bussystem, insbesondere über einen CAN-Bus, verbunden. Bei der Verbindung des Bedienteils mit der Steuerung über ein Anschlußkabel ist vorgesehen, daß die Steuerung und das Bedienteil über einen CAN-Bus miteinander verbunden sind. Bei kabelloser Verbindung zwischen Steuerung und Bedienteil besitzen Steuerung und Bedienteil jeweils ein Sender/Empfänger-Bauteil (Transceiver). Das Bedienteil ist mit dem dem Bedienteil zugeordneten, mobilen Transceiver insbesondere über ein CAN-Bussystem verbunden. Auch die Steuerung ist mit dem der Steuerung zugeordneten, stationären Transceiver über ein CAN-Bussystem verbunden. Es kann in beiden Fällen jedoch auch ein anderes Bussystem, insbesondere ein Feldbussystem, vorgesehen sein. Die Verbindung zwischen dem mobilen Transceiver des Bedienteils und dem stationären Transceiver der Steuerung erfolgt vorteilhaft über ein spezielles funkgeeignetes Bussystem, das vom Bussystem der Steuerung abweicht. Wird das Bedienteil von einer Batterie mit elektrischer Energie versorgt, so übernimmt die Batterie nicht nur die Energieversorgung des Bedienteils, sondern auch die Energieversorgung des mobilen Transceivers.

Für eine Steuereinrichtung, die eine Steuerung und ein Bedienteil, das mit der Steuerung lösbar verbunden werden kann, umfaßt, wobei das Bedienteil eine Anzeige, einen Speicher und eine Eingabeeinrichtung aufweist, ist vorgesehen, daß die Eingabeeinrichtung Tastenelemente mit variabler Tastenbelegungsanzeige aufweist.

Die Tastenbelegungsanzeige kann dabei sowohl eine Beschriftung als auch eine Anzeige der Tastenbelegung, beispielsweise in Form einer Diode oder einer flexiblen Symbol- und/oder Schriftanzeige, sein. Die variable Tastenbelegungsanzeige ermöglicht, die Anzeige der Tastenbelegung an die jeweilige Steuerung anzupassen.

Vorteilhaft ist die Eingabeeinrichtung eine Folientastatur, wobei an mindestens einer Taste der Folientastatur mindestens eine Tasche zur Aufnahme eines Beschriftungsstreifens angeordnet ist. Die Tasche zur Aufnahme des Beschriftungsstreifens ermöglicht auf einfache Weise eine Anpassung der Tastenbeschriftung. Dadurch ist ein vielfältiger Einsatz des Bedienteils auf einfache Weise möglich. Für die unterschiedlichen Steuerungen muß nur ein Bedienteil beim Hersteller vorgehalten werden, dem unterschiedliche Beschriftungsstreifen für unterschiedliche Anwendungsfälle beigefügt sein können. Bei Verbindung des Bedienteils mit einer Steuerung wird die Tastenbelegungsinformation an das Bedienteil übermittelt und dort angezeigt, so daß der Bediener den Beschriftungsstreifen, der die Tastenbelegung angibt, auswählen und an dem Bedienteil anbringen kann.

Vorteilhaft ist eine Tasche zwischen mindestens einem Schaltelement und einer Deckfolie der Folientastatur angeordnet. In der Tasche kann der Beschriftungsstreifen angeordnet werden. Die Tasche schützt den Beschriftungsstreifen vor Umgebungseinflüssen wie Verschmutzung oder Spritzwasser. In der Tasche kann der Beschriftungsstreifen auf einfache Weise angeordnet werden. Bei Ausbildung des Beschriftungsstreifens aus einem Kunststoff kann der Beschriftungsstreifen durchleuchtet werden, so daß die Tastaturbeleuchtung sichtbar bleibt. Um ein einfaches Einführen und Austauschen der Beschriftungsstreifen zu ermöglichen, ist vorgesehen, daß spezielle Streifen als Einführhilfe vorgesehen sind, die insbesondere bei der Herstellung des Bedienteils in den jeweiligen Taschen angeordnet werden. Die als Einführhilfe dienenden Streifen sind vorteilhaft schmaler und länger ausgebildet als die Taschen und so dimensioniert, daß sie gemeinsam mit einem Beschriftungsstreifen in der Tasche plaziert werden können. Die als Einführhilfe dienenden Streifen können leicht aus der Tasche herausgezogen werden. Vorteilhaft ist auf den als Einführhilfe dienenden Streifen eine Startbelegung der Tasten, beispielsweise eine Taste zum Ein- und Ausschalten sowie eine Hilfetaste, angezeigt.

Ein Ausführungsbeispiel der Erfindung wird im folgenden anhand der Zeichnung erläutert. Es zeigen:
- Fig. 1: eine Seilwinde mit einer Steuereinrichtung in schematischer Darstellung,
- Fig. 2: eine schematische Schnittdarstellung durch die Folientastatur des Bedienteils der Steuereinrichtung aus Fig. 1,
- Fig. 3: Ausführungsbeispiele für Beschriftungsstreifen für das Bedienteil aus Fig. 1,
- Fig. 4: eine schematische Darstellung eines Ausführungsbeispiels einer Steuereinrichtung,
- Fig. 5: eine schematische Darstellung einer Steuereinrichtung, die mehrere Steuerungen und mehrere Bedienteile umfaßt.

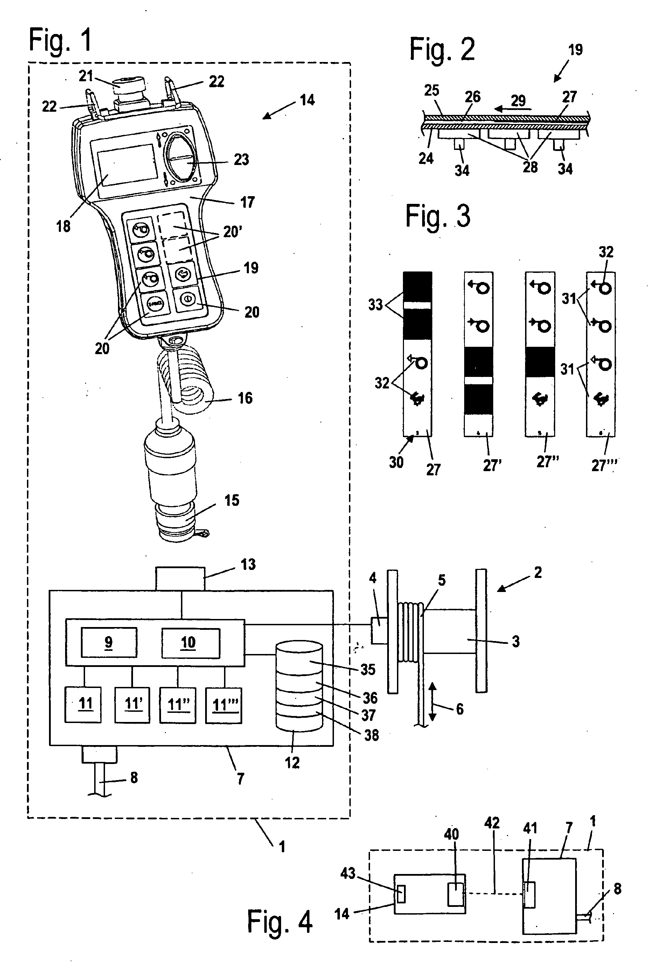

In Fig. 1 ist als spezifisches Beispiel für eine allgemeine Steuereinrichtung mit einer insbesondere mikroprozessorbasierten Steuerung und einem Bedienteil eine Förder- oder Hebeeinrichtung mit schematisch angedeuteter Seilwinde 2 gezeigt. Die Förder- oder Hebeeinrichtung kann auch eine andere Einrichtung, insbesondere jede Art von Spillwinde, ein Kran oder dgl. sein. Eine derartige allgemeine Steuereinrichtung mit einer Steuerung und einem Bedienteil kann auch in anderen Einrichtungen zum Einsatz kommen, insbesondere zum Einsatz an Einrichtungen eines Fahrzeugs wie eines Abschleppfahrzeugs, eines Müllfahrzeugs, eines Feuerwehrfahrzeugs, eines Roboterfahrzeugs oder z. B. eines Fahrzeugs für militärische Zwecke. An derartigen Fahrzeugen kann die Steuereinrichtung beispielsweise Seilwinden, Hubeinrichtungen, Drehleitern oder dgl. steuern. Allgemein ist das erfindungsgemäße Verfahren und die Steuereinrichtung bei allen Maschinensteuerungen einsetzbar, egal ob auf dem Land, unter Tage, auf oder unter Wasser, in der Luft, im Weltraum oder sonstwo. Auch wenn die Erfindung anhand eines Beispiels einer Steuerung und eines Bedienteils erläutert ist, dient das Verfahren zum Konfigurieren von ein oder mehreren Bedienteilen an einer oder mehreren Steuerungen in ein oder mehreren Steuereinrichtungen.

Die beispielhaft gezeigte Steuereinrichtung besteht aus zumindest einer Steuerung mit zumindest einem Bedienteil und dient dem Betrieb einer Seilwinde 2 mit einer Seiltrommel 3, die von einem Antriebsmotor 4 rotierend angetrieben ist. Um die Seiltrommel 3 ist ein Seil 5 gewickelt. Je nach Drehrichtung des Antriebsmotors 4 wird das Seil 5 auf die Seiltrommel 3 auf- oder von dieser abgewickelt. Dies ist durch den Doppelpfeil 6 angedeutet. Zur Steuerung des Antriebsmotors 4 besitzt die Seilwinde 2 eine Steuereinrichtung 1. Die Steuereinrichtung 1 kann den Antriebsmotor 4 beispielsweise mittelbar über Stellelemente wie Ventile oder dgl. steuern. Die Steuereinrichtung 1 umfaßt eine Steuerung 7 sowie ein Bedienteil 14, das mit der Steuerung 7 verbunden werden kann. Hierzu besitzt die Steuerung 7 eine Anschlußbuchse 13, in die ein Anschlußstecker 15 des Bedienteils 14 eingesteckt werden kann.

Die Steuerung 7 besitzt eine Anschlußleitung 8 zur Stromversorgung. Die Stromversorgung des Bedienteils 14 erfolgt über die Steuerung 7 und ein Anschlußkabel 16, mit dem das Bedienteil 14 über den Anschlußstecker 15 mit der Anschlußbuchse 13 der Steuerung 7 verbunden ist. Die Steuerung 7 ist vorteilhaft als ,embedded System' ausgeführt und besitzt einen Prozessor 9, dem ein Arbeitsspeicher 10 zugeordnet ist. Die Steuerung 7 besitzt außerdem einen Speicher 12. In der Steuerung 7 sind mehrere Applikationen 11, 11', 11'', 11''' hinterlegt. Die Applikationen 11 können in dem Speicher 12 abgelegt sein. Den Applikationen 11, 11', 11'', 11''' sind einzelne Funktionen der Seilwinde 2 zugeordnet, wie Heben des Seils, Senken des Seils oder Eilgang. Die Anzahl und Art der Applikationen 11 kann je nach Anwendungsfall unterschiedlich sein. Dabei ist vorgesehen, daß alle möglichen Applikationen 11 in der Steuerung 7 hinterlegt sind. Die Aktivierung der für den jeweiligen Anwendungsfall benötigten Applikationen 11 erfolgt über Konfigurationsparameter. Dabei kann auch eine Anpassung und Abstimmung der Einzelapplikationen 11 auf den jeweiligen Anwendungsfall erfolgen.

Der Speicher 12 besitzt einen Speicherplatz 35, in dem Konfigurationen der Applikationen 11, also die Konfigurationsparameter, sowie die Standardsprache des Bedienteils 14 hinterlegt sind. Der Speicher 12 besitzt einen weiteren Speicherplatz 36, in dem die Tastenbelegung des Bedienteils 14 hinterlegt ist. In einem weiteren Speicherplatz 37 sind Sprachinformationen für alle wählbaren Sprachen des Bedienteils 14 einschließlich der Standardsprache (Default-Sprache) hinterlegt. Eine Betriebsanleitung bzw. eine Kurzbetriebsanleitung, Wartungshinweise und/oder Diagnosetools sind in einem weiteren Speicherplatz 38 hinterlegt.

In dem Speicher 12 können weitere Konfigurationsinformationen hinterlegt sein. Konfigurationsinformationen können beispielsweise Informationen, um das Bedienteil betriebsbereit zu machen, Informationen über Menümasken, Informationen, die die Logik der Steuerung betreffen, Hinweistexte, Bedieninformationen, Sicherheitshinweise, Fehlermeldungen, Informationen zur vorbeugenden Wartung, Informationen zur Instandhaltung und Reparatur, sonstige Schnittstellendefinitionen und -funktionen und/oder weitere Informationen für den Benutzer sein. Es sind auch andere und/oder weitere Konfigurationsinformationen möglich.

Das Bedienteil 14 besitzt ein Gehäuse 17, in dem ein nicht gezeigter Speicher angeordnet ist. An dem Gehäuse 17 ist eine Anzeige 18 (Display) angeordnet, die beispielsweise eine LCD-Anzeige sein kann. In dem Gehäuse 17 ist ein Prozessor zum Betrieb der Anzeige 18 vorgesehen, der in Fig. 1 ebenfalls nicht dargestellt ist. Benachbart zur Anzeige 18 ist ein Wipptaster 23 angeordnet, der als Joystick fungiert und mit dem die Bewegung des Seils 5 aktiviert wird (Seil Aus, Seil Ein). Zur Bedienung der Seilwinde 2 besitzt das Bedienteil 14 eine Folientastatur 19 mit mehreren Tasten 20. Den Tasten 20 sind unterschiedliche Applikationen 11 der Steuerung 7 zugeordnet. So kann beispielsweise eine Taste 20 zur Gangwahl und eine weitere Taste 20 zum automatischen Ausfahren des Seils 5, insbesondere bei Einmannbedienung, vorgesehen sein. Die Steuerung 7 kann eine Vielzahl von Applikationen 11 umfassen, wobei nicht jede Applikation 11 vom Bediener aktivierbar sein muß. Applikationen 11, die vom Bediener nicht aktiviert werden können, ist keine Taste 20 zugeordnet. Die Folientastatur 19 besitzt acht Tasten in zwei Reihen, wobei zwei Tasten 20' im Ausführungsbeispiel nicht belegt sind. Die Anzahl der belegten und nicht belegten Tasten kann je nach Anwendungsfall unterschiedlich sein. Am Kopf des Bedienteils 14 ist ein Not-Aus-Taster 21 angeordnet. Beidseitig des Not-Aus-Tasters 21 sind Schutzbügel 22 angeordnet, die einen mechanischen Schutz des Not-Aus-Tasters 21 vor Beschädigung darstellen und die verhindern, daß das Bedienteil 14 auf der Fläche der Anzeige 18 aufliegen kann.

Anstatt der Tasten 20, die an der Folientastatur 19 ausgebildet sind, können auch andere Tastenelemente wie beispielsweise Taster, Joysticks, Sensortasten oder Tastenelemente, die auf einer Anzeige, insbesondere einer LCD-Anzeige (LCD-Display; Touchscreen), angezeigt und mit Sensortasten oder mit einem Griffel zu betätigen sind, vorgesehen sein. Die Anzeige kann dabei die Anzeige 18 sein, es kann jedoch auch eine separate Anzeige für die Tastenelemente vorgesehen sein.

In dem Bedienteil 14 sind zunächst, also nach der Fertigung des Bedienteils 14, keine Konfigurationsinformationen wie Informationen über die Tastenbelegung und Sprachinformationen hinterlegt. Diese Informationen sind in der Steuerung 7 gespeichert. Beim ersten Verbinden des Bedienteils 14 mit der Steuerung 7 über das Anschlußkabel 16 wird das Bedienteil 14 an ein Bussystem, insbesondere ein CAN-Bussystem der Steuerung 7 angeschlossen. Über das Anschlußkabel 16 wird das Bedienteil 14 außerdem mit elektrischer Energie versorgt. Über das Bussystem werden dem Bedienteil 14 Informationen über die Tastenbelegung sowie die Sprachinformationen der Standardsprache (Default-Sprache) übermittelt. Außerdem können eine Betriebsanleitung bzw. eine Kurzbetriebsanleitung, Wartungshinweise und/oder Informationen zur Diagnose übermittelt werden. Die Übermittlung erfolgt insbesondere nach dem Einschalten und Initialisieren der Steuerung 7. Es kann auch vorgesehen sein, daß diese Informationen nur auf Anforderung des Bedieners übermittelt werden. Auch weitere Konfigurationsinformationen können beim ersten Verbinden oder auf Anforderung des Bedieners übermittelt werden. Diese Informationen werden im Speicher des Bedienteils 14 gespeichert. Die Information über die Tastenbelegung kann an der Anzeige 18 angezeigt werden. Hierzu kann vorgesehen sein, daß der Bediener die Anzeige 18 einschalten und eine vorgesehene Taste, beispielsweise eine Hilfetaste drücken muß. Die Information über die Tastenbelegung kann jedoch auch automatisch und unabhängig von einer Eingabe des Bedieners an der Anzeige 18 angezeigt werden.

Die Anzeige der Information über die Tastenbelegung kann auch an den Tasten 20 selbst oder benachbart zu den Tasten 20 erfolgen. Die Anzeige kann auch an einem anderen Bereich des Bedienteils so erfolgen, daß die Tastenbelegungsinformation leicht dem oder den Tastenelementen zuzuordnen ist. Die Anzeige kann beispielsweise über Dioden oder dgl. erfolgen. Es können auch Tastenelemente mit flexibler Symbol- und/oder Schriftanzeige vorgesehen sein, wobei die Tastenbelegungsinformation an der Anzeige des Tastenelements erfolgt oder es kann eine flexible Symbol- und/oder Schriftanzeige benachbart zu einem oder mehreren Tastenelementen angeordnet sein. Ein Übermitteln der Konfigurationsinformationen von der Steuerung 7 zum Bedienteil 14 erfolgt vorteilhaft nur beim Initialisieren der Steuerung 7. Wird das Bedienteil 14 abgeschaltet oder die Verbindung zwischen Bedienteil 14 und Steuerung 7 getrennt, erfolgt in der Regel keine erneute Übermittlung der Konfigurationsinformationen. Dadurch wird vermieden, daß eine vom Bediener gewählte Sprache bei jedem Ausschalten und Wiedereinschalten des Bedienteils 14 wieder überschrieben wird. Das Bedienteil kann auch so konfiguriert werden, daß die vom Bediener zuletzt eingestellte Sprache erhalten bleibt, auch wenn das Bedienteil oder die Steuerung ausgeschaltet wird. Vorteilhaft werden die weiteren Konfigurationseinstellungen beim Start der Steuerung oder nach dem Verbinden des Bedienteils mit der Steuerung neu eingelesen.

Der Aufbau der Folientastatur 19 ist in Fig. 2 schematisch gezeigt. Die Folientastatur besitzt im Bereich jeder Taste 20 ein Schaltelement 28, das einen elektrischen Kontakt beim Drücken der zugeordneten Taste 20 schließt. Unterhalb jedes Schaltelements 28 ist vorteilhaft jeweils eine Leuchtdiode 34 angeordnet, die die Tasten 20 beleuchtet. Die Schaltelemente 28 sind von einer Schutzfolie 24 abgedeckt, die das Gehäuse 17 im Bereich der Folientastatur 19 dicht verschließt. Oberhalb der Schutzfolie 24 ist eine Deckfolie 25 angebracht, die auf der Schutzfolie 24 aufliegt. Zwischen den Folien 24 und 25 ist mindestens eine Tasche 26 gebildet, in die ein Beschriftungsstreifen 27 in Richtung des in Fig. 2 gezeigten Pfeils 29 eingeschoben werden kann. Im Ausführungsbeispiel sind zwei Taschen 26 vorgesehen, die sich jeweils über eine Reihe von vier Tasten 20 erstrecken.

In Fig. 3 sind Ausführungsbeispiele für Beschriftungsstreifen 27, 27', 27'' , 27''' gezeigt. Jeder Beschriftungsstreifen 27, 27', 27'', 27''' besitzt vier Anzeigefelder 31, die jeweils im Bereich einer Taste 20 zu liegen kommen. Je nach vorgesehener Tastenbelegung weisen die Anzeigefelder 31 Symbole 32 auf, beispielsweise für das automatische Ausfahren des Seils 5 und für den Eilgang. Im Bereich nicht belegter Tasten 20 sind geschwärzte Felder 33 vorgesehen. Das Schwärzen der Felder 33 ist so ausgeführt, daß das Licht der Leuchtdioden 34 abgeschirmt ist und die Felder 33 dunkel bleiben. Die nicht belegten Tasten 20 erscheinen dadurch schwarz. An einem Ende weisen die Beschriftungsstreifen 27, 27', 27'' , 27''' jeweils eine Kennung 30 auf. Die Kennung 30 besteht im Ausführungsbeispiel aus einer Ziffer. Es können jedoch auch andere Kennungen 30 vorgesehen sein.

In der Anzeige 18 wird die Kennung der Beschriftungsstreifen 27, 27', 27'', 27''' angezeigt, in deren Anzeigefeldern 31 die tatsächliche Tastenbelegung der Folientastatur 19 dargestellt ist. Der Bediener kann dann die Beschriftungsstreifen 27 mit der entsprechenden Kennung 30 heraussuchen und in die beiden Taschen 26 einführen. Hierzu kann in den Taschen 26 werkseitig ein Hilfsstreifen angeordnet sein, der schmaler und länger ist als die Beschriftungsstreifen 27. Dies erleichtert das Einfädeln der Beschriftungsstreifen 27. Der Hilfsstreifen kann Informationen über die bei der Erstinbetriebnahme zu drückenden Tasten enthalten. Dadurch wird die Erstinbetriebnahme vereinfacht. Dadurch, daß die Konfigurationsinformationen in der Steuerung 7 hinterlegt sind und zur Bedieneinheit 14 übertragen werden, kann die Bedieneinheit 14 auf einfache Weise an die Steuerung 7 angepaßt werden. Hierzu muß der Bediener lediglich die Beschriftungsstreifen 27 mit der Kennung, die von der Anzeige 18 angezeigt wird, in die zugehörigen Taschen 26 einführen.

Anstatt des Anschlußkabels 16 kann auch eine kabellose Übertragung der Daten zwischen dem Bedienteil 14 und der Steuerung 7 vorgesehen sein. Für die kabellose Verbindung können vorteilhaft alle Arten von Funk, insbesondere auch Kurzstreckenfunk (z.B. Bluetooth), eingesetzt werden. Auch andere Arten der kabellosen Datenübertragung können vorteilhaft sein. Das Bedienteil 14 kann ein separates Kabel zur Energieversorgung aufweisen, wenn eine weitere externe Spannungsversorgung vorhanden ist.

Vorteilhaft ist das Bedienteil 14 batteriebetrieben. Dies ist in Fig. 4 schematisch gezeigt. Die in Fig. 4 gezeigte Steuerung 7 der Steuereinrichtung 1 besitzt einen Transceiver 41, also ein Bauteil zum kabellosen Senden und Empfangen von Daten. Das Bedienteil 14 besitzt einen Transceiver 40. Die Transceiver 40 und 41 können über eine kabellose Verbindung 42 miteinander verbunden werden. Die Verbindung des Transceivers 40 mit dem Bedienteil 14 und die Verbindung des Transceivers 41 mit der Steuerung 7 erfolgt vorteilhaft jeweils über einen CAN-Bus. Die kabellose Verbindung 42 erfolgt über ein für kabellose Verbindungen geeignetes Bussystem. Zur Energieversorgung besitzt das Bedienteil 14 eine Batterie 43, die sowohl die Anzeige 18 (Fig. 1) als auch den Transceiver 40 mit Energie versorgt. Auch weitere Einrichtungen des Bedienteils 14 können von der Batterie 43 mit Energie versorgt werden. Die Steuerung 7 besitzt die Anschlußleitung 8 zur Energieversorgung. Der weitere Aufbau der Steuereinrichtung 1 entspricht dem der in Fig. 1 gezeigten Steuereinrichtung 1.

Wird das Bedienteil 14 an eine andere Steuerung 7 angeschlossen, wird von dieser Steuerung überprüft, ob die Konfigurationsinformationen des Bedienteils 14 mit den in der Steuerung hinterlegten zulässigen Konfigurationsinformationen übereinstimmen. Liegt keine Übereinstimmung vor, so werden die Konfigurationsinformationen von der Steuerung 7 zum Bedienteil 14 übertragen und dort gespeichert. Der Speicher des Bedienteils 14 wird hierzu überschrieben, so daß das Bedienteil 14 nur einen geringen Speicherplatz benötigt. Dabei kann vorgesehen sein, daß eine in dem Bedienteil 14 gespeicherte, insbesondere von einem Benutzer ausgewählte Sprache erhalten bleibt und nicht mit der Default-Sprache der Steuerung 7 überschrieben wird. Es kann auch vorgesehen sein, daß die Konfigurationsinformationen bei jeder Verbindung eines Bedienteils mit einer Steuerung übermittelt und in dem Bedienteil gespeichert werden, ohne daß zuvor eine Überprüfung der bereits gespeicherten Konfigurationsinformationen erfolgt.

Ist das Bedienteil 14 mit der Steuerung 7 verbunden, so kann der Bediener die voreingestellte Sprache ändern. Die vom Bediener gewählte Sprache wird dann von der Steuerung 7 zum Bedienteil 14 übermittelt und dort gespeichert. Dabei wird die bisher in dem Bedienteil 14 gespeicherte Standardsprache (Default-Sprache) überschrieben.

Der Bediener kann über das Bedienteil 14 von der Steuerung 7 außerdem eine Bedienanleitung oder eine Kurzbedienungsanleitung anfordern. Diese Anleitung wird auf Anforderung des Bedieners zum Bedienteil 14 übermittelt und dort zwischengespeichert. Vorteilhaft findet keine dauerhafte Speicherung der Bedienanleitung in dem Bedienteil 14 statt, da hierfür zusätzlicher Speicherplatz benötigt wird. Dadurch, daß nur die momentan benötigten Informationen in dem Bedienteil 14 gespeichert werden, kann der in dem Bedienteil 14 angeordnete Speicher klein ausgeführt werden. In entsprechender Weise kann der Bediener Wartungshinweise und/oder Diagnosetools von der Steuerung 7 anfordern. Auch weitere und/oder andere Konfigurationsinformationen können auf Anforderung des Bedieners oder beim Einschalten der Steuerung 7 an das Bedienteil 14 übermittelt werden.

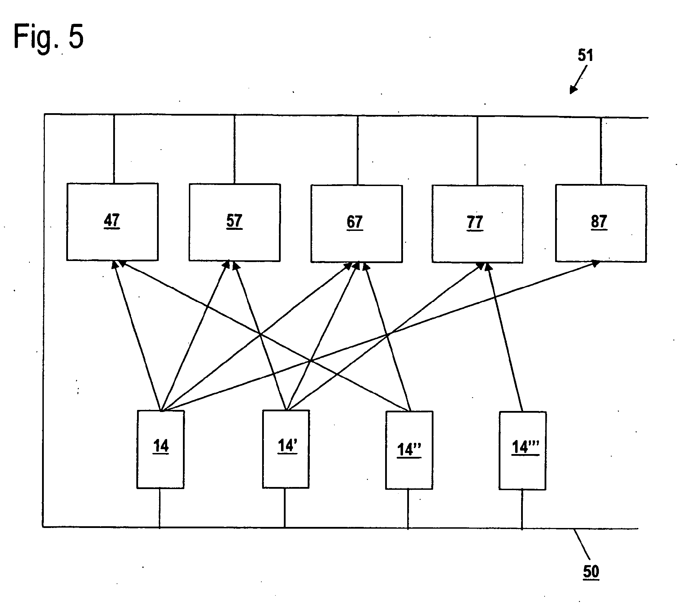

Vorteilhaft werden mehrere Steuerungen und/oder mehrere Bedienteile in einem gemeinsamen Bussystem, insbesondere einem CAN-Bussystem betrieben. Dies ist schematisch in Fig. 5 gezeigt. Fig. 5 zeigt eine Steuereinrichtung 51, die mehrere Steuerungen 47, 57, 67, 77, 87 sowie vier Bedienteile 14, 14', 14'', 14''' umfaßt. Die vier Bedienteile 14, 14', 14'', 14''' sind vorteilhaft identisch aufgebaut. Die Bedienteile 14, 14', 14'', 14''' können jedoch auch unterschiedlich aufgebaut sein. Dabei können sich die Bedienteile 14, 14', 14'', 14''' insbesondere in der Art und Anzahl der Eingabeeinrichtungen, die beispielsweise Taster, Schalter, Joysticks, Wipptaster oder dgl. sein können, unterscheiden. Die Art und Anzahl der Bedieneinrichtungen jedes Bedienteils 14, 14', 14'', 14''' ist dabei so gewählt, daß alle gewünschten bzw. maximal möglichen Konfigurationen der Steuerung bzw. der Steuerungen, mit denen dieses Bedienteil 14, 14', 14'', 14''' zusammenwirkt bzw. zusammenwirken kann, mit den vorhandenen Bedieneinrichtungen bedient werden können. Die fünf Steuerungen 47, 57, 67, 77, 87 können unterschiedliche Steuerungen sein. Beispielsweise kann die Steuerung 47 die Steuerung einer Winde, die Steuerung 57 die Steuerung eines Krans, die Steuerung 67 die Steuerung einer Ladebordwand, die Steuerung 77 die Steuerung einer Bergeeinrichtung und die Steuerung 87 die Steuerung eines Räumschilds sein. Die Aufzählung ist lediglich beispielhaft. Es können Steuerungen anderer Einrichtungen oder eine andere Zahl von Steuerungen in dem Bussystem 50 miteinander verbunden sein. In der Steuereinrichtung 51, beispielsweise in den Steuerungen 47, 57, 67, 77, 87 oder über das Bussystem 50, ist festgelegt, welches Bedienteil 14, 14', 14'', 14''' auf welche Steuerung 47, 57, 67, 77, 87 wirken kann. Im Ausführungsbeispiel ist vorgesehen, daß das Bedienteil 14 auf die Steuerungen 47, 57, 67 und 87 wirken kann, das Bedienteil 14' auf die Steuerungen 57, 67, 77, das Bedienteil 14'' auf die Steuerungen 47 und 67 und das Bedienteil 14''' auf die Steuerung 77. Dabei können mehrere Bedienteile 14, 14', 14'', 14''' auf eine Steuerung 47, 57, 67, 77 wirken. Allerdings muß sichergestellt sein, daß zu jedem Zeitpunkt nur ein Bedienteil 14, 14', 14'', 14''' auf eine Steuerung 47, 57, 67, 77, 87 wirkt. Hierzu kann vorgesehen sein, daß das Bedienteil 14, 14', 14'', 14''', das zuerst eine Steuerung 47, 57, 67, 77, 87 auswählt, die Priorität hat und mit dieser verbunden wird. Ein späterer Zugriff eines anderen Bedienteils 14, 14', 14'', 14''' auf diese Steuerung 47, 57, 67, 77, 87 wird dann nicht zugelassen.

Es kann vorgesehen sein, daß ein Bedienteil 14, 14', 14'', 14''' gleichzeitig auf mehrere Steuerungen 47, 57, 67, 77, 87 wirkt. Hierzu müssen entsprechende Bedienelemente wie Taster, Joysticks oder ähnliches vorgesehen sein. Die Konfiguration muß eine entsprechende Bedienung zulassen.

Beim Betrieb mehrerer Steuerungen 47, 57, 67, 77, 87 an einem gemeinsamen Bussystem 50 ist vorgesehen, daß beim Aktivieren einer Steuerung 47, 57, 67, 77, 87 an dem Bussystem 50, beispielsweise durch Einschalten der Steuerung, die Steuerung 47, 57, 67, 77, 87 die ihr zugeordneten Bedienteile 14, 14', 14'', 14''' sucht und diese durch Übermitteln der vorgesehenen Konfigurationsinformationen konfiguriert.

Neben dem Bussystem 50 können die Steuerungen 47, 57, 67, 77, 87 sowie die Bedienteile 14, 14', 14'' , 14''' auch über Versorgungsleitungen, Leitungen für das NOT/AUS sowie eine Notbetätigung verbunden sein. Auch weitere oder andere Verbindungen der Steuerungen und der Bedienteile untereinander können zweckmäßig sein.

Beim Betrieb mehrerer Steuerungen 47, 57, 67, 77, 87 in einem Netzwerk ist es möglich, alle Steuerungen 47, 57, 67, 77, 87 von einem zentralen Rechner aus zu konfigurieren. Die Konfiguration der Steuerungen 47, 57, 67, 77, 87 kann dabei auch über das Internet erfolgen. Die Konfiguration, insbesondere die Konfiguration über das Internet, kann beispielsweise im Rahmen einer Updatefunktion erfolgen, die automatisch oder auf Anforderung des Bedieners ausgeführt wird. Dadurch, daß die Konfigurationsinformationen von den Steuerungen 47, 57, 67, 77, 87 zu den Bedienteilen 14, 14', 14'', 14''' übermittelt werden, ist eine separate Konfiguration der Bedienteile 14 nicht notwendig. Dadurch wird der Aufwand zur Konfiguration verringert.

## Patentansprüche

1. Verfahren zum Konfigurieren zumindest eines mobilen Bedienteils an zumindest einer mikroprozessorbasierten Steuerung, wobei das Bedienteil (14, 14', 14'', 14''') mit der Steuerung (7, 47, 57, 67, 77, 87) lösbar verbunden werden kann, und das Bedienteil (14, 14', 14'', 14''') eine Anzeige (18), einen Speicher und eine Eingabeeinrichtung aufweist, wobei beim Verbinden des Bedienteils (14, 14' , 14'', 14''') mit der Steuerung (7, 47, 57, 67, 77, 87) notwendige Konfigurationsinformationen des Bedienteils (14, 14', 14'', 14''') von der Steuerung (7, 47, 57, 67, 77, 87) an das Bedienteil (14, 14', 14'', 14''') übermittelt und dort verwertet werden, **dadurch gekennzeichnet, daß** bei jedem Verbinden des Bedienteils (14, 14', 14'', 14''') mit der Steuerung (7, 47, 57, 67, 77, 87) überprüft wird, ob die in dem Bedienteil (14, 14', 14 '', 14''') gespeicherten Konfigurationsinformationen mit den in der Steuerung (7, 47, 57, 67, 77, 87) gespeicherten Konfigurationsinformationen übereinstimmen und, falls die Informationen nicht übereinstimmen, die Konfigurationsinformationen der Steuerung (7, 47, 57, 67, 77, 87) zum Bedienteil (14, 14', 14'', 14''') übertragen und unter Überschreiben der bestehenden Konfigurationsinformationen in dem Bedienteil (14, 14', 14'', 14''') gespeichert werden.

2. Verfahren nach Anspruch 1,
**dadurch gekennzeichnet, daß** die notwendigen Konfigurationsinformationen beim erstmaligen Verbinden übermittelt werden.

3. Verfahren nach Anspruch 2,
**dadurch gekennzeichnet, daß** die Konfigurationsinformationen im Speicher des Bedienteils (14, 14', 14'', 14''') gespeichert werden.

4. Verfahren nach einem der Ansprüche 1 bis 3,
**dadurch gekennzeichnet, daß** die Eingabeeinrichtung mindestens ein Tastenelement umfaßt, insbesondere eine Folientastatur (19) ist, daß die Konfigurationsinformationen eine Information über die Belegung mindestens eines Tastenelements umfassen und daß das Bedienteil (14, 14', 14'', 14''') die Tastenbelegungsinformation anzeigt.

5. Verfahren nach einem der Ansprüche 1 bis 4,
**dadurch gekennzeichnet, daß** die Konfigurationsinformationen Sprachinformationen der Sprache umfassen, die in der Steuerung (7, 47, 57, 67, 77, 87) als Standardsprache eingestellt ist.

6. Verfahren nach Anspruch 5,
**dadurch gekennzeichnet, daß** bei Auswahl einer von der Standardsprache abweichenden Sprache durch den Bediener an dem Bedienteil (14, 14', 14'', 14'''), die Sprachinformationen der ausgewählten Sprache von der Steuerung (7, 47, 57, 67, 77, 87) zum Bedienteil (14, 14', 14'', 14''') übermittelt werden und daß die in dem Bedienteil (14, 14', 14'', 14''') gespeicherten Sprachinformationen mit den Sprachinformationen der ausgewählten Sprache überschrieben werden.

7. Verfahren nach einem der Ansprüche 1 bis 6,
**dadurch gekennzeichnet, daß** die Konfigurationsinformationen eine Betriebsanleitung, Wartungshinweise und/oder Informationen zur Diagnose umfassen.

8. Verfahren nach einem der Ansprüche 1 bis 7,
**dadurch gekennzeichnet, daß** das Bedienteil (14, 14', 14'', 14''') über ein Anschlußkabel (16) mit der Steuerung (7, 47, 57, 67, 77, 87) verbunden wird, und daß das Bedienteil (14, 14', 14'', 14''') über das Anschlußkabel (16) mit elektrischer Energie versorgt wird.

9. Verfahren nach einem der Ansprüche 1 bis 7,
**dadurch gekennzeichnet, daß** das Bedienteil (14, 14', 14'', 14''') kabellos mit der Steuerung (7, 47, 57, 67, 77, 87) verbunden wird.

10. Verfahren nach einem der Ansprüche 1 bis 9,
**dadurch gekennzeichnet, daß** das Bedienteil (14, 14', 14'', 14''') beim Verbinden mit der Steuerung (7, 47, 57, 67, 77, 87) über ein Bussystem, insbesondere über einen CAN-Bus, mit der Steuerung (7, 47, 57, 67, 77, 87) verbunden wird.

## Claims

1. Method for configuring at least one mobile operating device on at least one microprocessor-based controller, wherein the operating device (14, 14', 14'', 14''') can be releasably connected to the controller (7, 47, 57, 67, 77, 78) and the operating device (14, 14', 14'', 14''') comprises a display (18), a memory and an input device, wherein configuration data of the operating device (14, 14', 14'', 14''') required when connecting the operating device (14, 14', 14'', 14''') to the controller (7, 47, 57, 67, 77, 87) are transmitted by the controller (7, 47, 57, 67, 77, 87) to the operating device (14, 14', 14'', 14''') and evaluated there,
**characterised in that**, whenever the operating device (14, 14', 14'', 14''') is connected to the controller (7, 47, 57, 67, 77, 78), it is checked whether the configuration data stored in the operating device (14, 14', 14'', 14''') correspond to the configuration data stored in the controller (7, 47, 57, 67, 77, 87), and **in that**, if the configuration data do not correspond, the configuration data of the controller (7, 47, 57, 67, 77, 87) are transmitted to the operating device (14, 14', 14'', 14''') and are stored in the operating device (14, 14', 14'', 14'''), overwriting the existing configuration data.

2. Method according to claim 1,
**characterised in that** the required configuration data are transmitted in the initial connection process.

3. Method according to claim 2,
**characterised in that** the configuration data are stored in the memory of the operating device (14, 14', 14'', 14''').

4. Method according to any of claims a to 3,
**characterised in that** the input device includes at least one key element, in particular a membrane keyboard (19), **in that** the configuration data include information on the key assignment of the at least one key element, and **in that** the operating device (14, 14', 14'', 14''') indicates the key assignment.

5. Method according to any of claims 1 to 4,
**characterised in that** the configuration data include language information of the language set as standard language in the controller (7, 47, 57, 67, 77, 87).

6. Method according to claim 5,
**characterised in that**, if a language different from the standard language is selected by the operator at the operating device (14, 14', 14'', 14'''), the language information of the selected language is transmitted by the controller (7, 47, 57, 67, 77, 87) to the operating device (14, 14', 14'', 14'''), and **in that** the language information stored in the operating device (14, 14', 14'', 14''') is overwritten by the language information of the selected language.

7. Method according to any of claims 1 to 6,
**characterised in that** the configuration data include operating instructions, maintenance hints and/or diagnostic information.

8. Method according to any of claims 1 to 7,
**characterised in that** the operating device (14, 14', 14'', 14''') is connected to the controller (7, 47, 57, 67, 77, 87) via a connecting cable (16), and **in that** the operating device (14, 14', 14'', 14''') is supplied with electric power via the connecting cable (16).

9. Method according to any of claims 1 to 7,
**characterised in that** the operating device (14, 14', 14'', 14''') is connected to the controller (7, 47, 57, 67, 77, 87) without using a cable.

10. Method according to any of claims 1 to 9,
**characterised in that** the operating device (14, 14', 14'', 14''') when being connected to the controller (7, 47, 57, 67, 77, 87) is connected to the controller (7, 47, 57, 67, 77, 87) via a bus system, in particular via a CAN bus.

## Revendications

1. Procédé pour configurer au moins un élément de manoeuvre mobile sur au moins une commande basée sur un microprocesseur, étant précisé que l'élément de manoeuvre (14, 14', 14'', 14''') peut être raccordé de manière amovible à la commande (7, 47, 57, 67, 77, 87) et comporte un affichage (18), une mémoire et un dispositif d'entrée, et que lors du raccordement de l'élément de manoeuvre (14, 14', 14'', 14''') à la commande (7, 47, 57, 67, 77, 87) , les informations de configuration de l'élément de manoeuvre (14, 14 ' , 14'', 14''') qui sont nécessaires sont transmises par la commande (7, 47, 57, 67, 77, 87) audit élément de manoeuvre (14, 14' , 14'', 14''') et sont traitées dans celui-ci,
**caractérisé en ce qu'**à chaque raccordement de l'élément de manoeuvre (14, 14', 14'', 14''') à la commande (7, 47, 57, 67, 77, 87), une vérification a lieu pour voir si les informations de configuration mises en mémoire dans l'élément de manoeuvre (14, 14', 14'', 14''') correspondent aux informations de configuration mises en mémoire dans la commande (7, 47, 57, 67, 77, 87), et au cas où les informations ne correspondent pas les informations de configuration de la commande (7, 47, 57, 67, 77, 87) sont transmises à l'élément de manoeuvre (14, 14', 14'', 14''') et sont mises en mémoire dans celui-ci en écrasant les informations de configuration existantes.

2. Procédé selon la revendication 1,
**caractérisé en ce que** les informations de configuration nécessaires sont transmises lors du premier raccordement.

3. Procédé selon la revendication 2,
**caractérisé en ce que** les informations de configuration sont mémorisées dans la mémoire de l'élément de manoeuvre (14, 14', 14'', 14''').

4. Procédé selon l'une des revendications 1 à 3,
**caractérisé en ce que** le dispositif d'entrée comprend au moins un élément à touches, en particulier un clavier à membrane (19), **en ce que** les informations de configuration comprennent une information sur l'affectation d'au moins un élément à touches et **en ce que** l'élément de manoeuvre (14, 14', 14'', 14''') affiche l'information d'affectation de touches.

5. Procédé selon l'une des revendications 1 à 4,
**caractérisé en ce que** les informations de configuration comprennent des informations sur la langue qui est réglée comme langue standard dans la commande (7, 47, 57, 67, 77, 87) .

6. Procédé selon la revendication 5,
**caractérisé en ce que** lorsque l'utilisateur sélectionne sur l'élément de manoeuvre (14, 14', 14'', 14''') une langue différente de la langue standard, les informations sur la langue sélectionnée sont transmises par la commande (7, 47, 57, 67, 77, 87) à l'élément de manoeuvre (14, 14', 14'', 14''') et **en ce que** les informations de langue mises en mémoire dans ce dernier sont écrasées par celles de la langue sélectionnée.

7. Procédé selon l'une des revendications 1 à 6,
**caractérisé en ce que** les informations de configuration comprennent un mode d'emploi, des indications de maintenance et/ou des informations portant sur le diagnostic.

8. Procédé selon l'une des revendications 1 à 7,
**caractérisé en ce qu'**on raccorde l'élément de manoeuvre (14, 14' , 14'', 14''') à la commande (7, 47, 57, 67, 77, 87) par l'intermédiaire d'un câble de raccordement (16) et **en ce que** l'élément de manoeuvre (14, 14', 14'', 14''') est alimenté en énergie électrique par l'intermédiaire du câble de raccordement (16).

9. Procédé selon l'une des revendications 1 à 7,
**caractérisé en ce que** l'élément de manoeuvre (14, 14', 14'', 14''') est raccordé à la commande (7, 47, 57, 67, 77, 87) sans câble.

10. Procédé selon l'une des revendications 1 à 9,
**caractérisé en ce que** l'élément de manoeuvre (14, 14', 14'', 14'''), lors de son raccordement à la commande (7, 47, 57, 67, 77, 87), est raccordé à la commande (7, 47, 57, 67, 77, 87) par l'intermédiaire d'un système de bus, en particulier un bus CAN.
